# EUROPÄISCHE PATENTANMELDUNG

(11) **EP 4 067 522 A1**
(43) Veröffentlichungstag der Anmeldung: **05.10.2022**
(21) Anmeldenummer: 21165433.0
(22) Anmeldetag: 29.03.2021
(51) Int. Cl.: C22C 38/00, F16B 1/00

(54) **VERBINDUNGSELEMENT, BEWEHRUNG UND VERWENDUNG EINES VERBINDUNGSELEMENTS**

(71) Anmelder: Hilti Aktiengesellschaft, 9494 Schaan (LI)
(72) Erfinder: BISCHOF, Michael, 6900 Bregenz (AT); SESSINGHAUS, Nadine, 6800 Feldkirch (AT); KUNZ, Jakob, 9472 Grabs (CH); SCHWERTNER, Wolfram, 9470 Werdenberg (CH)
(74) Vertreter: Hilti Aktiengesellschaft Corporate Intellectual Property

(57) **Zusammenfassung**

Die Erfindung betrifft ein Verbindungselement (10) zur kraft- und/oder formschlüssigen Verbindung eines ersten Bauelements (16) mit einem zweiten Bauelement (18). Erfindungsgemäß umfasst es einen ein Formgedächtnismaterial aufweisenden Verbindungsabschnitt. Des Weiteren betrifft die Erfindung eine Bewehrung (28) sowie eine Verwendung des Verbindungselements (10). Die Erfindung ermöglicht eine einfache und dennoch sichere Verbindung der zwei Bauelemente (16, 18) miteinander.

## Beschreibung

Die Erfindung betrifft ein Verbindungselement zur kraft- und/oder formschlüssigen Verbindung eines ersten Bauelements mit einem zweiten Bauelement. Des Weiteren betrifft die Erfindung eine Bewehrung sowie eine Verwendung eines Verbindungselements.

Unter einem Bauelement kann im Rahmen der vorliegenden Erfindung ein Bauelement aus den Bereichen Hochbau, Tiefbau, Industrieanlagenbau, Schiffsbau, Stahlbau und/oder dergleichen verstanden werden. Elektronische Bauelemente können vom Begriff des Bauelements nicht mitumfasst sein.

Betonbauteile sind üblicherweise mit einer Bewehrung zu versehen. Die Bewehrung kann wenigstens ein Bewehrungselement umfassen. Oftmals besteht die Aufgabe, ein Bewehrungselement mit einem anderen zu verbinden.

Bislang erfordert eine solche Verbindung in der Regel, dass wenigstens ein Ende des Bewehrungselements bearbeitet wird. Insbesondere ist bislang wenigstens ein Gewinde zu formen oder das Ende ist aufzustauchen. Diese Bearbeitungen sind mit grossen Aufwänden verbunden und erfordern häufig schweres und kostenintensives Gerät. Nachteilig ist bei Lösungen mit einem Gewinde ferner, dass oftmals das Bewehrungselement bei der Montage gedreht werden muss.

Eine weitere Alternative besteht in der Verwendung eines Verbindungselements, das zur Verbindung der zu verbindenden Bauelemente zu verpressen ist. Die hierzu erforderlichen Presswerkzeuge sind jedoch oftmals sehr schwer und in den oftmals vorliegenden beengten Verhältnissen nur äusserst mühsam oder teilweise sogar überhaupt nicht verwendbar.

Aufgabe der vorliegenden Erfindung ist es daher, Mittel bereitzustellen, die eine Verbindung eines Bauelements mit einem anderen auf einfache und dennoch sichere Weise ermöglichen.

Gelöst wird die Aufgabe durch ein Verbindungselement zur kraft- und/oder formschlüssigen Verbindung eines ersten Bauelements mit einem zweiten Bauelement, umfassend einen ein Formgedächtnismaterial aufweisenden Verbindungsabschnitt.

Ein Formgedächtnismaterial kann dabei ein Material sein, das ausgehend von einer Ausgangsgeometrie durch einen Aktivierungsvorgang ein Bestreben entwickelt, sich selbsttätig in eine Zielgeometrie umzuformen. Im Folgenden wird dieses Bestreben als Formgedächtniseffekt bezeichnet. Besonders bevorzugt können die Ausgangsgeometrie und/oder die Zielgeometrie einem aus dem Formgedächtnismaterial ausgebildeten Element einprägbar sein. Ob die Zielgeometrie tatsächlich erreicht wird, kann dabei von äußeren Umständen, insbesondere von externen geometrischen Zwangsbedingungen abhängen. Vorzugsweise ist das Formgedächtnismaterial ausgebildet, im Falle einer das Erreichen der Zielgeometrie verhindernden Zwangsbedingung entsprechende Kräfte und/oder Drücke auf einen die Zwangsbedingung erzeugenden Körper auszuüben.

Der Erfindung liegt dabei der Gedanke zugrunde, durch Ausnutzung des Formgedächtniseffekts eine werkzeuglose oder zumindest weitgehend werkzeuglose Montage zu ermöglichen. Insbesondere kann durch den Formgedächtniseffekt eine sonst erforderliche Pressung des Verbindungsabschnitts mittels eines Presswerkzeugs ersetzt werden. Ein Benutzer des Verbindungselements braucht somit lediglich noch das Verbindungselement und insbesondere das Formgedächtnismaterial aktivieren, was sich im Vergleich zu dem bisher üblichen Einsatz von Geräten bzw. Werkzeugmaschinen besonders einfach gestalten kann. Auch kann die Aktivierung an schwierig erreichbaren Stellen erfolgen.

Um die gewünschte Verbindung zwischen den beiden Bauelementen herzustellen, bedarf es nur weniger, rasch ausführbarer Vorarbeiten. Somit lässt sich, insbesondere wenn eine Vielzahl von Verbindungen herzustellen ist, eine besonders hohe Produktivität erzielen.

Da der Formgedächtniseffekt ein dem Formgedächtnismaterial intrinsisches Bestreben ist, können Fehlbedienungen durch den Benutzer, beispielsweise zu schwache Pressungen oder Pressungen an ungeeigneten Stellen des Verbindungselements, weitestgehend ausgeschlossen werden, sodass die Herstellung einer Verbindung zwischen den zwei Bauelementen besonders sicher erfolgen kann.

Das Formgedächtnismaterial kann thermisch aktivierbar sein. Insbesondere kann es eingerichtet sein, durch eine kurzzeitige, beispielsweise im Bereich von mehreren Sekunden, beispielsweise im Bereich von 5 Sekunden bis 50 Sekunden, Erwärmung, insbesondere ausgehend von einer Normaltemperatur, aktiviert zu werden.

Dabei ist es besonders vorteilhaft, wenn das Formgedächtnismaterial eine Aktivierungstemperatur oberhalb einer Raumtemperatur, vorzugsweise über 100°C, besonders bevorzugt über 140°C und weiter bevorzugt zumindest bis 170 °C, aufweist. Es kann somit durch Erwärmen bis zu einer Temperatur oberhalb einer üblichen Raumtemperatur, vorzugsweise über 100°C, besonders bevorzugt über 140°C und weiter bevorzugt zumindest bis 170 °C, aktivierbar sein. Auch eine Aktivierung bei einer Temperatur von etwa 200 °C ist denkbar. Die übliche Raumtemperatur kann dabei der vorangehend genannten Normaltemperatur entsprechen. Sie kann sich vorzugsweise im Bereich zwischen 5 °C und 25 °C, beispielsweise 20°C, bewegen. Die Verbindung kann somit bei üblichen Umgebungstemperaturen hergestellt werden.

Bei einer Klasse von Ausführungsformen kann das Formgedächtnismaterial magnetisch aktivierbar sein, sodass es zur Aktivierung genügt, einen Magneten, beispielsweise einen stabförmigen Magneten, in die Nähe des Formgedächtnismaterials zu bringen. Eine solche Aktivierung ist auch bei unterschiedlichsten Umgebungsbedingungen, zum Beispiel auch bei hoher Luftfeuchte, auf besonders einfache Weise möglich.

Das Formgedächtnismaterial kann eine eisenbasierte Formgedächtnislegierung umfassen. Eine solche eisenbasierte Formgedächtnislegierung kann beispielsweise Eisen sowie Mangan, Silizium, Chrom und/oder Nickel enthalten. [Hier eine präferierte Legierung mit Legierungsanteilen eventuell nennen]. Derartige eisenbasierte Formgedächtnislegierung sind ausreichend und kostengünstig verfügbar. Ihr Formgedächtniseffekt kann vergleichsweise hohe Klemmkräfte und/oder Klemmdrücke entwickeln. Sie können thermisch aktivierbar, insbesondere bei Temperaturen oberhalb der Raumtemperatur, sein.

Vielfältige Einsatzmöglichkeiten, insbesondere im Bereich des Hoch- und/oder Tiefbaus, ergeben sich, wenn der Verbindungsabschnitt zur Aufnahme eines Bewehrungselements, beispielsweise eines Bewehrungseisens, ausgebildet ist.

Vorzugsweise kann zumindest der Verbindungsabschnitt hülsenförmig ausgebildet sein. Der Verbindungsabschnitt kann somit zwei offene Enden aufweisen. Die zu verbindenden Bauelemente können dann zumindest mit jeweils einem ihrer Enden in jeweils eines der offenen Enden eingeschoben werden. Besonders bevorzugt ist das gesamte Verbindungselement hülsenförmig ausgebildet, sodass das Verbindungselement zur Herstellung der Verbindung verhältnismäßig wenig Raum beansprucht.

Eine derartige Hülsenform ist besonders geeignet zur geradlinigen Verbindung der zwei zu verbindenden Bauelemente. Beispielsweise kann somit ein stangenförmiges Bewehrungseisen durch ein zweites stangenförmiges Bewehrungseisen verlängert werden. Denkbar sind auch andere, vorzugsweise röhrenförmige Formen. So kann das Verbindungselement als gewinkeltes Rohr zur Verbindung zweier Bauelemente über Eck ausgebildet sein. Es kann auch T-förmig oder Kreuz-förmig, insbesondere als T-förmiges beziehungsweise Kreuz-förmiges Rohr, ausgebildet sein zur Verbindung von drei beziehungsweise vier Bauelementen miteinander.

Allgemein kann das Verbindungselement zur Verbindung von zwei oder mehr Bauelementen miteinander eingerichtet sein. Dazu kann das Verbindungselement, insbesondere der Verbindungsabschnitt, entsprechend viele offenen Enden aufweisen.

Besonders bevorzugt sind Ausführungsformen der Erfindung, bei der der Verbindungsabschnitt wenigstens einen Konus, insbesondere einen Innenkonus, aufweist. Vorzugsweise kann der Verbindungsabschnitt wenigstens zwei Konen, insbesondere beidenends jeweils einen Konus, aufweisen. Er kann zumindest eines der Bauelemente umfangsseitig umschließen. Der kleinste Innendurchmesser des Konus kann gleich oder im Wesentlichen gleich eines typischen Durchmessers eines in den Verbindungsabschnitt einzubringenden Bauelements beziehungsweise eines einzubringenden Endes des Bauelements sein.

Der Konus ermöglicht es, das Bauelement, insbesondere sein einzubringendes Ende, spielfrei oder zumindest im Wesentlichen spielfrei in den Verbindungsabschnitt einzubringen. Dies ermöglicht einen Kraftschluss mit besonders hohen Klemmkräften beziehungsweise Klemmdrücken. Zudem können die Klemmkräfte beziehungsweise Klemmdrücke gleichmäßig eingeleitet werden; lokale, auf dem einzubringenden Bauelement lastende Spannungsspitzen können somit vermieden werden. Auch ermöglicht der Konus eine besonders vielfältige Verwendung des Verbindungselements, insbesondere für unterschiedliche Arten und/oder Größen von Bauelementen.

Generell können ein oder mehrere der offenen Enden des Verbindungsabschnitts mit einem Innenkonus versehen sein.

Ein Gestaltungsmerkmal, um die erzielbaren Klemmspannungen beziehungsweise Klemmdrücke einzustellen, ergibt sich aus der Steigung des Konus, insbesondere in Abhängigkeit von dem verwendeten Formgedächtnismaterial.

Hierbei hat sich eine Konussteigung von höchstens 10%, bevorzugt höchstens 5%, insbesondere höchstens 3%, besonders bevorzugt höchstens 2%, als besonders günstig erwiesen. Um eine ausreichende Wirkung der konischen Gestalt zu erzielen, kann die Konussteigung ferner mindestens 0,1%, insbesondere mindestens 0,5%, betragen.

Ein weiteres Gestaltungsmerkmal findet sich in der Länge des Konus. Die Länge des Konus kann insbesondere in Abhängigkeit von der Art wenigstens eines der zu verbindenden Bauelemente gewählt sein. Dabei kann berücksichtigt werden, dass übliche Bauelemente Toleranzen, insbesondere hinsichtlich der Dicke und/oder eines Durchmessers eines einzubringenden Endes, aufweisen. Die Länge kann insbesondere derart bemessen sein, dass selbst bei einem Bauelement am Rande der zulässigen Toleranzen noch eine zur Erzeugung einer ausreichenden Klemmspannung beziehungsweise eines ausreichenden Klemmdrucks notwendige Restklemmlänge zur Verfügung steht.

Vorzugsweise kann das Verbindungselement, insbesondere sein Verbindungsabschnitt, auch eingerichtet sein, dass die Klemmkraft des aktivierten Verbindungsabschnitts größer als eine, insbesondere eine typische und/oder eine maximale Zugfestigkeit wenigstens eines der zu verbindenden Bauelemente ist. Dazu kann das Verbindungselement zur Verbindung einer oder mehrerer Klassen von Bauelementen eingerichtet sein. Dies kann insbesondere mit Konussteigungen zwischen 0,5% und 1% erreicht werden.

Die eingangs genannten Verbindungsaufgaben ergeben sich insbesondere bei Bewehrungen, insbesondere zur Bewehrung von Beton. Eine vorteilhafte Klasse von Verbindungselementen kann daher eingerichtet sein, als erstes Bauelement ein Bewehrungselement mit dem zweiten Bauelement, das vorzugsweise ebenfalls ein Bewehrungselement sein kann, zu verbinden. Das Bewehrungselement kann beispielsweise ein Bewehrungseisen sein.

Wie vorangehend erläutert, kann zumindest bei bestimmten Formgedächtnismaterialien die Aktivierung thermisch erfolgen. Sind diese Formgedächtnismaterialien elektrisch leitfähig, so können diese besonders einfach elektrisch erwärmt und dadurch aktiviert werden. Denkbar ist dazu, dass der Benutzer des Verbindungselements ein akkubetriebenes und/oder netzbetriebenes Aktivierungsgerät zur Aktivierung verwendet. Das Aktivierungsgerät kann eingerichtet sein, einen elektrischen Strom im Verbindungselement, insbesondere im Verbindungsabschnitt, erzeugen. Dazu kann das Aktivierungsgerät eingerichtet sein, zwischen zwei verschiedenen Stellen des Verbindungselements eine elektrische Spannung erzeugen. Alternativ oder ergänzend kann das Aktivierungsgerät eingerichtet sein, den elektrischen Strom per Induktion zu erzeugen.

Weist zumindest der Verbindungsabschnitt eine elektrische Isolierung auf, so kann die elektrische Erwärmung auf das zu aktivierende Formgedächtnismaterial fokussiert sein. Die elektrische Isolierung kann zudem korrosive Effekte reduzieren oder vermeiden. Die elektrische Isolierung kann im Bereich von Kontaktflächen des Verbindungselements, insbesondere des Verbindungsabschnitts, mit denen das Verbindungselement die miteinander verbunden Bauelemente kontaktiert, ausgebildet sein. Bei einem hülsenförmigen Verbindungsabschnitt kann dies insbesondere eine Innenseite des Verbindungsabschnitts sein.

Der Formschluss und/oder der Kraftschluss lassen sich verbessern, wenn der Verbindungsabschnitt, insbesondere eine Innenseite des Verbindungsabschnitts, einen strukturierten Oberflächenabschnitt aufweist. Der strukturierte Oberflächenabschnitt kann dazu komplementär oder im Wesentlichen komplementär zur Oberfläche wenigstens eines der zu verbindenden Bauelemente oder zumindest seines einzubringenden Endes, ausgebildet sein. Allgemein kann der strukturierte Oberflächenabschnitt rau sein.

Um Vorbereitungsarbeiten vor Ort, beispielsweise an einer Baustelle, zu vermeiden, kann das Verbindungselement, insbesondere sein Verbindungsabschnitt und hier zumindest das Formgedächtnismaterial, vorgedehnt sein. Ein hülsenförmiger Verbindungsabschnitt kann dazu radial erweitert sein, seine Durchmesser können also vergrößert sein. Ein solcher vorgedehnter Zustand kann der Ausgangsgeometrie entsprechen. Nach Aktivierung ist somit das Formgedächtnismaterial bestrebt, als Zielgeometrie eine engere Geometrie einzunehmen, sodass im Verbindungsabschnitt befindliche Bauelemente form- und/oder kraftschlüssig verbunden werden.

In den Rahmen der Erfindung fällt des Weiteren eine Bewehrung, insbesondere zur Verstärkung eines Betonbauteils, umfassend ein Bewehrungselement, an dem ein erfindungsgemäßes Verbindungselement angeordnet ist. An eine solche Bewehrung kann ein zweites Bauelement, insbesondere ein zweites Bewehrungselement, auf besonders einfache und sichere Weise angeschlossen werden, indem das zweite Bauelement in den Verbindungsabschnitt des Verbindungselements eingebracht wird und anschließend das Formgedächtnismaterial des Verbindungsabschnitts aktiviert wird.

Die Erfindung umfasst des Weiteren eine Verwendung eines Verbindungselements, das eine eisenbasierte Formgedächtnislegierung aufweist, zur kraft- und/oder formschlüssigen Verbindung zweier Bauelemente, insbesondere wenigstens eines Bewehrungselements und eines weiteren Bauelements. Das weitere Bauelement kann ein zweites Bewehrungselement sein. Mit den Bewehrungselementen kann wenigstens eine Bewehrung, insbesondere zur Bewehrung eines Betonbauteils, herstellbar und/oder hergestellt sein.

Dazu kann insbesondere eines der vorangehend beschriebenen, erfindungsgemäßen Verbindungselemente verwendet werden.

Wird ein Verbindungselement mit einer eisenbasierten Formgedächtnislegierung verwendet, kann die eisenbasierte Formgedächtnislegierung zur Aktivierung auf mindestens 100°C, vorzugsweise auf 130° bis 230° C, besonders bevorzugt 160°C bis 200 °C, erwärmt werden.

Eine Überhitzung, je nach Formgedächtnismaterial beispielsweise deutlich über 200°C, beispielsweise über 250 °C, kann vermieden werden, um die erzielbaren Klemmkräfte oder Klemmdrücke nicht oder zumindest im Wesentlichen nicht zu reduzieren.

Besonders vorteilhaft ist eine Verwendung, bei der das Formgedächtnismaterial, insbesondere die eisenbasierte Formgedächtnislegierung, physikalisch, insbesondere durch einen elektrischen Strom und/oder durch einen Phasenwechsel, chemisch, insbesondere durch eine wärmeerzeugende chemische Reaktion, und/oder durch einen Heißstoff, insbesondere ein Heißgas, aktiviert wird. Zur physikalischen Erwärmung mittels eines Phasenwechsels kann ein aufgeladener oder zumindest aufladbarer Latentwärmespeicher am Verbindungselement angeordnet und/oder anordenbar sein. Zur Aktivierung des Formgedächtnismaterials kann dann der zuvor aufgeladene Latentwärmespeicher, beispielsweise durch einen mechanischen Impuls, aktiviert werden, sodass Wärme zur Aktivierung des Formgedächtnismaterials freigesetzt wird. Zur chemischen, insbesondere thermochemischen, Aktivierung kann chemisch aktives Material, beispielsweise ein Thermitgemisch, am Verbindungselement angeordnet sein und/oder anordenbar sein. Eine mit dem chemisch aktiven Material verbundene Reaktion kann ausgelöst werden, um somit wiederum das Formgedächtnismaterial zu aktivieren. Insbesondere bei Verwendung eines stark exothermen Materials wie beispielsweise dem Thermitgemisch, kann neben oder anstelle der Kraft- und/oder Formschlüsse auch ein Formschluss herstellbar sein.

Eine Aktivierung durch elektrischen Strom kann durch das vorangehend beschrieben Aktivierungsgerät, insbesondere durch Anlage einer Spannung und / oder induktiv, erfolgen. Eine Aktivierung durch Heißgase kann durch Nutzung der von einem Gasbrenner erzeugten heißen Abgase erfolgen.

Die Verwendung kann auf einer Baustelle, insbesondere einer Hochbau- und/oder einer Tiefbau-Baustelle, erfolgen.

Zur Verwendung kann das Formgedächtnismaterial vor Aktivierung vorgedehnt und/oder vorgespannt sein.

Die Verwendung kann bei Umgebungstemperaturen im Bereich zwischen -50°C und 50° C, insbesondere bei 5°C bis 25°C erfolgen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine schematische Querschnittansicht eines Verbindungselements vor Aktivierung, in das zwei Bauelemente zur Verbindung miteinander eingebracht sind;
- Fig. 2: eine schematische Querschnittansicht des Verbindungselements mit den zwei Bauelementen nach Aktivierung;
- Fig. 3: ein Druck-Dehnungsdiagramm zur Darstellung der Verwendung des Verbindungselements und
- Fig. 4: eine Bewehrung.

In der nachfolgenden Beschreibung der Figuren werden zur Erleichterung des Verständnisses der Erfindung für gleiche oder sich funktional entsprechende Elemente jeweils die gleichen Bezugszeichen verwendet.

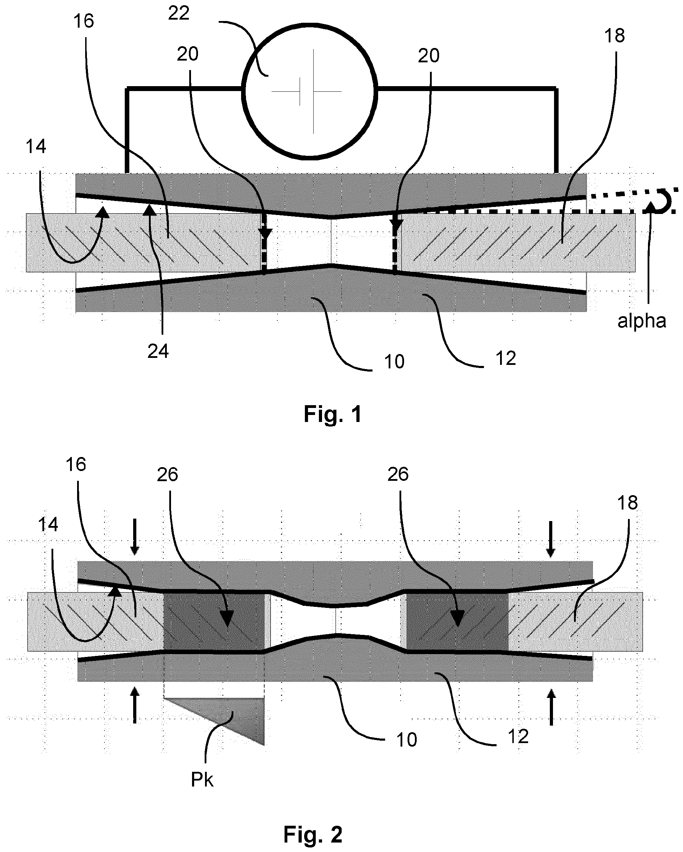

**Fig. 1** zeigt in einer schematischen Querschnittansicht ein Verbindungselement **10** mit einem Verbindungsabschnitt **12.** Bei diesem Ausführungsbeispiel entspricht der Verbindungsabschnitt 12 dem gesamten Verbindungselement 10.

Das Verbindungselement 10 und damit auch der Verbindungsabschnitt 12 sind hülsenförmig ausgebildet. Zu den beiden offenen Enden des Verbindungsabschnitts 12 hin verlaufend sind Innenkonus **14** eingearbeitet. Die Innenkonen **14** weisen Konussteigungen **alpha** von ca. 2% auf.

Der Verbindungsabschnitt 12 ist aus einer eisenbasierten Formgedächtnislegierung, insbesondere vom Typ Fe-Mn-Si, besonders bevorzugt vom Typ Fe-Mn-Si-Cr-Ni, ausgebildet.

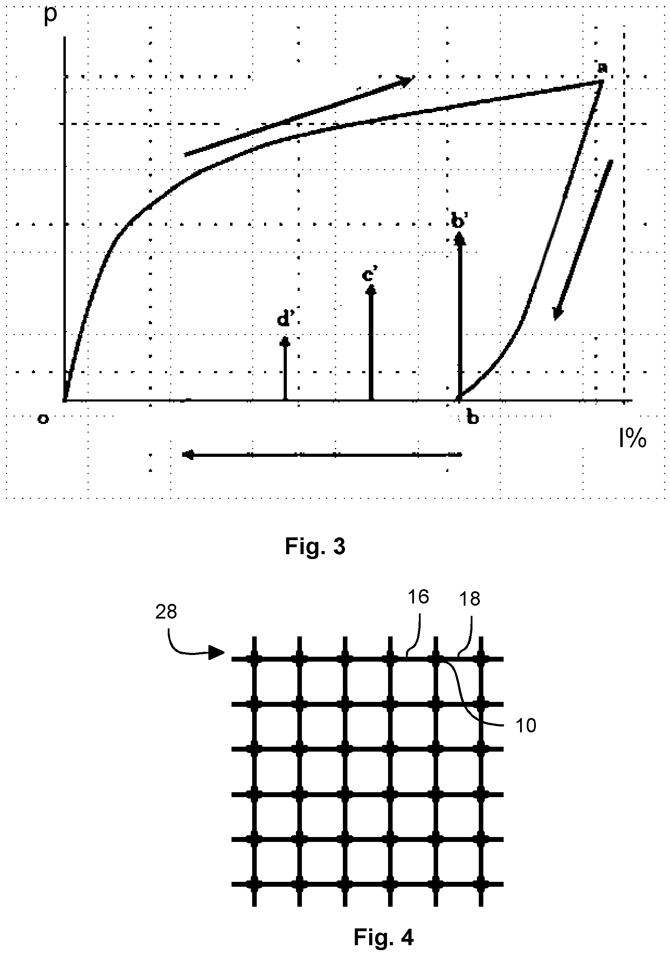

Wie im Zusammenhang mit Fig. 3 näher erläutert wird, ist der Verbindungsabschnitt 12 im Zustand gemäß Fig. 1 vorgedehnt. Insbesondere ist der Verbindungsabschnitt 12 radial aufgeweitet. Die Aufweitung und damit Vordehnung kann beispielsweise mittels kegelförmiger Stempel (in Fig. 1 nicht dargestellt) erfolgen, die in die Innenkonen 14 hineingepresst werden. Vorzugsweise wird ein Schmiermittel verwendet, um im Anschluss an die Aufweitung und der damit verbundenen teilplastischen Deformation des Verbindungsabschnitts 12 die Stempel wieder aus dem Verbindungsabschnitt 12 entfernen zu können. Die Vordehnung kann dabei bei einer üblichen Raumtemperatur, beispielsweise 20 °C, erfolgen.

In die Innenkonen 14 sind ein erstes Bauelement **16** und ein zweites Bauelement **18** zur Verbindung miteinander eingebracht. Zu erkennen ist, dass die Bauelemente 16 und 18 jeweils in Anfangskontaktbereichen **20** die Innenkonen 14 und damit den Verbindungsabschnitt 12 kontaktieren. Aufgrund der konischen Gestaltung des Verbindungsabschnitts 12 lassen sich somit unterschiedlichste Arten von Bauelementen und insbesondere Bauelemente unterschiedlicher Größen in den Verbindungsabschnitt 12 einbringen, sodass die Bauelemente den Verbindungsabschnitt 12 radial oder zumindest im Wesentlichen radial trotz beispielsweise unterschiedlicher Durchmesser stets innenseitig kontaktieren können.

Der Zustand gemäß Fig. 1 stellt den Zustand des Verbindungselements 10 zu Beginn der Herstellung einer zumindest kraftschlüssigen Verbindung zwischen den beiden Bauelementen 16 und 18 dar. Dabei kann sich das Verbindungselement 10 und damit auch der Verbindungsabschnitt 12 auf einer üblichen Temperatur, beispielsweise der herrschenden Umgebungstemperatur, beispielsweise im Bereich zwischen 5 °C und 25 °C befinden.

Um einen Kraftschluss und je nach Geometrie der Bauelemente 18 gegebenenfalls einen Formschluss zwischen den beiden Bauelementen 16 und 18 herzustellen, ist die eisenbasierte Formgedächtnislegierung zu aktivieren. In diesem Ausführungsbeispiel ist die eisenbasierte Formgedächtnislegierung durch Erhitzen ausgehend von einer Raumtemperatur aktivierbar. Insbesondere ist eine Erwärmung der Formgedächtnislegierung über 100 °C, beispielsweise auf eine Aktivierungstemperatur von 160 °C, erforderlich.

Die eisenbasierte Formgedächtnislegierung ist zudem elektrisch leitfähig. Daher kann ein Aktivierungsgerät **22,** in Fig. 1 lediglich schematisch dargestellt, an das Verbindungselement 10 und insbesondere an den aus der eisenbasierten Formgedächtnislegierung ausgebildeten Verbindungsabschnitt 12 elektrisch angeschlossen werden. Das Aktivierungsgerät 22 weist eine Stromquelle, beispielsweise ein Akkumulator, insbesondere einen Lithium-basierten Akkumulator, auf. Es ist eingerichtet, einen elektrischen Strom, vorzugsweise einen Strompuls mit einer Dauer im Bereich von Sekunden oder weniger Minuten, in dem an ihm angeschlossenen Verbindungsabschnitt 12 fließen zu lassen. Somit lässt sich die eisenbasierte Formgedächtnislegierung bis zur Aktivierung erwärmen. Das Aktivierungsgerät 22 ist ferner eingerichtet, beispielsweise mittels eines Temperatursensors und/oder mittels Überwachung des erzeugten Stroms und der angelegten elektrischen Spannung, nach Erreichen der Aktivierungstemperatur selbsttätig abzuschalten, sodass ein Überhitzen vermieden wird. Nach Aktivierung kann das Aktivierungsgerät 22 wieder vom Verbindungselement 10 getrennt werden.

Der Verbindungsabschnitt 12 kann vorzugsweise innenseitig, insbesondere im Bereich der Innenkonen 14, mit einer Isolierbeschichtung 24, beispielsweise einem elektrisch isolierenden Lack, ausgekleidet sein. Der durch das Aktivierungsgerät 22 erzeugte Strom fließt somit lediglich durch das Verbindungselement 10 und insbesondere durch die darin enthaltene eisenbasierte Formgedächtnislegierung.

Durch Erreichen der Aktivierungstemperatur wird die eisenbasierte Formgedächtnislegierung aktiviert, sodass sie das Bestreben entwickelt, sich in ihre Zielgeometrie, hier der Zustand vor Vordehnung des Verbindungsabschnitts 12, zu verformen.

Das Verbindungselement 10 und insbesondere der Verbindungsabschnitt 12 beginnen also radial zu schrumpfen, bis sie den Zustand gemäß **Fig. 2** erreichen.

Anhand von Fig. 2, in der wiederum eine schematische Querschnittansicht abgebildet ist, ist zu erkennen, dass der Verbindungsabschnitt 12 durch seine Schrumpfung im Bereich von Klemmkontaktbereichen **26** zur Anlage an die Bauelemente 16 beziehungsweise 18 gelangt. Je nach ursprünglichem Abstand der Innenseite des Verbindungsabschnitt 12 beziehungsweise der Innenkonen 14 werden dabei Klemmdrücke **Pk** entwickelt. In diesem Ausführungsbeispiel können die Klemmdrücke Pk bis zu 500 MPa betragen. In Fig. 2 ist dabei mit einem Dreieck symbolisch dargestellt, dass die Klemmdrücke Pk linear oder zumindest im Wesentlichen linear nach innen zunehmen und es somit zu keinen lokalen Spannungsspitzen kommt, durch die die Bauelemente 16 oder 18 geschädigt werden könnten.

Somit sind die Bauelemente 16 und 18 jeweils klemmend mit dem Verbindungsabschnitt 12 und damit auch miteinander zumindest kraftschlüssig verbunden.

Weisen die Bauelemente 16 und / oder 18 nichtglatte Oberflächen, beispielsweise geriffelte Oberflächen, auf, so kann es teilweise zu einem oder mehreren Hintergriffen des Verbindungsabschnitts 12 kommen, sodass sich je nach zu verbindenden Bauelementen 16 und/oder 18 neben den Kraftschlüssen auch Formschlüsse ausbilden können.

Anhand Fig. 3 soll nun die Verwendung des Verbindungselements 10, das eine eisenbasierte Formgedächtnislegierung aufweist, zur kraft- und/oder formschlüssigen Verbindung der zwei Bauelemente 16 und 18 näher erläutert werden.

Im Diagramm gemäß Fig. 3 sind schematisch die im Formgedächtnismaterial herrschenden Spannungen **p** gegen seine relative Dehnung **l%** aufgetragen.

Ausgehend vom nicht vorgedehnten, nicht vorgespannten Formgedächtnismaterial (Punkt **0**) wird das Formgedächtnismaterial, und insbesondere damit der hülsenförmige Verbindungsabschnitt 12 (Fig. 1), mittels der kegelförmigen Stempel vorgedehnt. Der hülsenförmige Verbindungsabschnitt 12 wird somit radial gedehnt, bis er am Punkt **a** eine maximale relative Dehnung l% erhält. Nun werden die Stempel entfernt. Dabei kommt es zu einer Rückfederung in der Größenordnung von bis zu ca. 1 %, vorzugsweise von bis zu 0,5 %, sodass eine Vordehnung mit einer Größenordnung im Bereich von ca. 2,5 % bis 6,5 % verbleibt.

Sodann werden die Bauelemente 16 und 18 (Fig. 1) in den Verbindungsabschnitt 12 soweit eingebracht, bis sie zumindest in den Anfangskontaktbereichen 20 (Fig. 1) den Verbindungsabschnitt 12 entsprechend dem Punkt **b** kontaktieren. Anzumerken ist dabei, dass die Rückfederung nicht zu einer vollständigen Rückbildung der Dehnung führt.

Anschließend erfolgt die Aktivierung des Formgedächtnismaterials durch Erwärmen bis mindestens zur Aktivierungstemperatur, beispielsweise bis auf 160 °C. Das Formgedächtnismaterial entwickelt somit entsprechend dem ihm eigenen Formgedächtniseffekt das Bestreben, wieder in den anfänglichen Zustand und damit auch den Zielzustand gemäß dem Punkt 0 zu gelangen.

Eine vollständige Rückentwicklung ist ihm aber aufgrund der Bauelemente 16 und 18 verwehrt. Je nach ursprünglichem Abstand zwischen dem jeweiligen Abschnitt entlang der Bauelemente 16 beziehungsweise 18 und dem Verbindungsabschnitt 12 kommt es zu einer teilweisen Verringerung der relativen Dehnung l%, wodurch sich der Verbindungsabschnitt 12 an das jeweilige Bauelement 16 beziehungsweise 18 anschmiegt. Entsprechend dem Ausmaß verbleibender relativer Dehnung l% kommt es zu unterschiedlich starken Klemmdrücken Pk (Fig. 2), die im Maximum, hier entsprechend dem Punkt **b'**, je nach Formgedächtnismaterial beispielsweise bis zu 500 MPa betragen können. Die Punkte **c'**, **d'** stellen dementsprechend Zustände dar mit geringerer verbleibender relativer Dehnung l% und dementsprechend geringeren Klemmdrücken Pk.

In diesem Zustand, also im Wesentlichen dem Zustand gemäß Fig. 2 entsprechend, sind somit die Bauelemente 16 und 18 mit insgesamt ausreichend hohen Klemmdrücken Pk am

Verbindungselement 10 festgelegt und damit sicher miteinander verbunden. Als ausreichend hohe Klemmdrücke Pk können insbesondere Klemmdrücke Pk angesehen werden, deren Flächenintegral über die Klemmkontaktbereiche 28 einer Klemmkraft entspricht, bei der das betreffende Bauteil 16 beziehungsweise 18 mit einer Haltekraft am Verbindungselement 10 festgelegt ist, die mindestens einer Bruchkraft, insbesondere Zugbruchkraft, des Bauteils 16 beziehungsweise 18 entspricht. Dies kann bedeuten, dass die Verbindung zumindest zwischen dem Verbindungselement 10 und dem Bauelement 16 oder 18 zugfester ist als das Bauelement 16 oder 18 selbst.

Abschließend zeigt **Fig. 4** eine Bewehrung **28.** Die Bewehrung 28 ist eingerichtet zur Bewehrung eines herzustellenden Betonbauteils. Sie weist eine Vielzahl von als stangenförmige Bewehrungseisen ausgebildeten Bauelementen auf, von denen beispielhaft ein erstes Bauelement 16 und ein zweites Bauelement 18 mit Bezugszeichen markiert sind.

Die Bauelemente, also die Bewehrungseisen, sind durch Verbindungselemente miteinander verbunden, von denen wiederum beispielhaft ein Verbindungselement 10 mit einem Bezugszeichen versehen ist. Diese Verbindungselemente entsprechen im Wesentlichen in Aufbau und Funktion den vorangehend in Bezug auf Fig. 1, Fig. 2 und Fig. 3 beschriebenen Verbindungselementen 10. Sie weisen beispielhaft die Besonderheit auf, dass sie Kreuz-förmig ausgebildet sind. Sie können in diesem Beispiel somit bis zu vier verschiedene Bauelemente mittels ihrer vier offenen Enden miteinander durch Kraft- und/oder Formschlüsse verbinden.

Insgesamt weist die Bewehrung 28 somit eine matrixförmige Struktur auf.

## Patentansprüche

1. **Verbindungselement** (10) zur kraft- und/oder formschlüssigen Verbindung eines ersten Bauelements (16) mit einem zweiten Bauelement (18), umfassend einen ein Formgedächtnismaterial aufweisenden Verbindungsabschnitt (12).

2. Verbindungselement nach Anspruch 1, **dadurch gekennzeichnet, dass** das Formgedächtnismaterial eine Aktivierungstemperatur oberhalb einer Raumtemperatur, vorzugsweise über 100°C, besonders bevorzugt über 140°C und weiter bevorzugt zumindest bis 170 °C, aufweist.

3. Verbindungselement nach einem der vorhergehenden Ansprüche, **dadurch gekennzeichnet, dass** das Formgedächtnismaterial magnetisch aktivierbar ist.

4. Verbindungselement nach einem der vorhergehenden Ansprüche, **dadurch gekennzeichnet, dass** das Formgedächtnismaterial eine eisenbasierte Formgedächtnislegierung umfasst.

5. Verbindungselement nach einem der vorhergehenden Ansprüche, **dadurch gekennzeichnet, dass** der Verbindungsabschnitt (12) zur Aufnahme eines Bewehrungselements, insbesondere eines Bewehrungseisens, ausgebildet ist.

6. Verbindungselement nach einem der vorhergehenden Ansprüche, **dadurch gekennzeichnet, dass** der Verbindungsabschnitt (12) hülsenförmig ausgebildet ist.

7. Verbindungselement nach einem der vorhergehenden Ansprüche, **dadurch gekennzeichnet, dass** der Verbindungsabschnitt wenigstens einen Konus, insbesondere einen Innenkonus (14), aufweist.

8. Verbindungselement nach einem der vorhergehenden Ansprüche, **dadurch gekennzeichnet, dass** die Konussteigung (alpha) höchstens 10%, bevorzugt höchstens 5%, insbesondere höchstens 3%, besonders bevorzugt höchstens 2%, beträgt.

9. Verbindungselement nach einem der vorhergehenden Ansprüche, **dadurch gekennzeichnet, dass** die Konussteigung (alpha) mindestens 0,1%, insbesondere mindestens 0,5%, beträgt.

10. Verbindungselement nach einem der vorhergehenden Ansprüche, **dadurch gekennzeichnet, dass** die Klemmkraft des aktivierten Verbindungsabschnitts (12) größer als eine Zugfestigkeit wenigstens eines der zu verbindenden Bauelemente (16, 18) ist.

11. Verbindungselement nach einem der vorhergehenden Ansprüche, **dadurch gekennzeichnet, dass** das Verbindungselement (12) eingerichtet ist, als erstes Bauelement (16) ein Bewehrungselement mit dem zweiten Bauelement (18), das vorzugsweise ebenfalls ein Bewehrungselement ist, zu verbinden.

12. Verbindungselement nach einem der vorhergehenden Ansprüche, **dadurch gekennzeichnet, dass** der Verbindungsabschnitt (12), insbesondere eine Innenseite des Verbindungsabschnitts (12), einen strukturierten Oberflächenabschnitt aufweist.

13. **Bewehrung** (28), insbesondere zur Verstärkung eines Betonbauteils, umfassend ein Bewehrungselement, an dem ein Verbindungselement (10) nach einem der vorhergehenden Ansprüche angeordnet ist.

14. **Verwendung** eines Verbindungselements (12), das eine eisenbasierte Formgedächtnislegierung aufweist, zur kraft- und/oder formschlüssigen Verbindung zweier Bauelemente (16, 18), insbesondere wenigstens eines Bewehrungselements und eines weiteren Bauelements.

15. Verwendung nach dem vorhergehenden Anspruch, **dadurch gekennzeichnet, dass** das Verbindungselement (10) ein Verbindungselement (10) nach einem der Ansprüche 1 bis 13 ist.

16. Verwendung nach einem der beiden vorhergehenden Ansprüche, **dadurch gekennzeichnet, dass** die eisenbasierte Formgedächtnislegierung zur Aktivierung auf mindestens 100°C, vorzugsweise auf 130° bis 230° C, besonders bevorzugt 160°C bis 200 °C, erwärmt wird.

17. Verwendung nach einem der Ansprüche 14 bis 16, **dadurch gekennzeichnet, dass** das Formgedächtnismaterial, insbesondere die eisenbasierte Formgedächtnislegierung, physikalisch, insbesondere durch einen elektrischen Strom und/oder durch einen Phasenwechsel, chemisch, insbesondere durch eine wärmeerzeugende chemische Reaktion, und/oder durch einen Heißstoff, insbesondere ein Heißgas, aktiviert wird.
